# EUROPEAN PATENT SPECIFICATION

(11) **EP 3 856 566 B1**
(45) Date of publication and mention of the grant of the patent: **09.12.2026**
(21) Application number: 19782880.9
(22) Date of filing: 23.09.2019
(51) Int. Cl.: B60L 58/12, B60L 58/20, B60L 1/00, B60L 1/02, B60P 3/20, B60H 1/32, B60H 1/00

(54) **REFRIGERATION SYSTEM AND ENERGY STORAGE DEVICE INTERFACE**
KÜHLSYSTEM UND SCHNITTSTELLE FÜR ENERGIESPEICHERVORRICHTUNG
SYSTÈME DE RÉFRIGÉRATION ET INTERFACE DE DISPOSITIF DE STOCKAGE D'ÉNERGIE

(30) Priority: 28.09.2018 US 201862738025 P
(43) Date of publication of application: 04.08.2021
(73) Proprietor: Carrier Corporation, Palm Beach Gardens, FL 33418 (US)
(72) Inventor: LIAO, XuQiang, Syracuse, New York 13221 (US)
(74) Representative: Dehns
(86) International application number: PCT/US2019/052381
(87) International publication number: WO 2020/068637

(56) References cited:
- EP-A1- 2 596 978
- EP-B1- 2 596 978
- WO-A1-2018/134634
- US-A1- 2010 305 794
- US-A1- 2017 210 194
- US-A1- 2018 029 436
- US-A1- 2018 273 018

## Description

### BACKGROUND

The subject matter disclosed herein generally relates to transportation refrigeration units, and more specifically to an apparatus and a method for powering a transportation refrigeration unit and associated vehicle.

Traditional refrigerated cargo trucks or refrigerated tractor trailers, such as those utilized to transport cargo via sea, rail, or road, is a truck, trailer or cargo container, generally defining a cargo compartment, and modified to include a refrigeration system located at one end of the truck, trailer, or cargo container. Refrigeration systems typically include a compressor, a condenser, an expansion valve, and an evaporator serially connected by refrigerant lines in a closed refrigerant circuit in accord with known refrigerant vapor compression cycles. A power unit, such as a combustion engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link. In other systems, the engine of the refrigeration unit drives a generator that generates electrical power, which in-turn drives the compressor.

With current environmental trends, improvements in transportation refrigeration units are desirable particularly toward aspects of efficiency, sound and environmental impact. With environmentally friendly refrigeration units, improvements in reliability, cost, and weight reduction is also desirable.
US 2018/0029436 A1 discloses a power management system and energy storage module for supplying power to a vehicle-transported refrigeration system when the vehicle is stopped and/or power from the vehicle electrical system is electrically isolated.

### BRIEF SUMMARY

According to a first aspect, a transportation refrigeration system as defined by claim 1 is provided.

Optionally, the transport refrigeration system comprises: a vehicle pitch sensor configured to detect a pitch angle of the vehicle, wherein the power management system is configured to adjust electrical power provided to the transportation refrigeration unit in response to the pitch angle of the vehicle.

Optionally, the power management system increases electrical power provided to the transportation refrigeration unit when the pitch angle of the vehicle indicates that the vehicle is going downhill.

Optionally, at least one of the energy storage device and the vehicle energy storage device includes a battery system.

Optionally, the energy storage device is located outside of the transportation refrigeration unit.

Optionally, the energy storage device is located within the transportation refrigeration unit.

Optionally, the power management system is removably electrically connected to the vehicle energy storage device.

According to another aspect, a method of operating a transportation refrigeration unit is provided as defined by claim 10.

Technical effects of embodiments of the present disclosure include apportioning electrical power between an energy storage device of a transportation refrigeration unit and a vehicle energy storage device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:

The following descriptions should not be considered limiting in any way. With reference to the accompanying drawings, like elements are numbered alike:
FIG. 1 is a perspective view of a transportation refrigeration system having an engineless transportation refrigeration unit as one, non-limiting, according to an embodiment of the present disclosure;
FIG. 2 is a schematic of the engineless transportation refrigeration unit, according to an embodiment of the present disclosure;
FIG. 3 is a block diagram of a power supply interface of the transportation refrigeration unit, according to an embodiment of the present disclosure; and
FIG. 4 is a flow diagram illustrating a method of operating a transportation refrigeration unit, according to an embodiment of the present disclosure.

### DETAILED DESCRIPTION

A detailed description of one or more embodiments of the disclosed apparatus and method are presented herein by way of exemplification and not limitation with reference to the Figures.

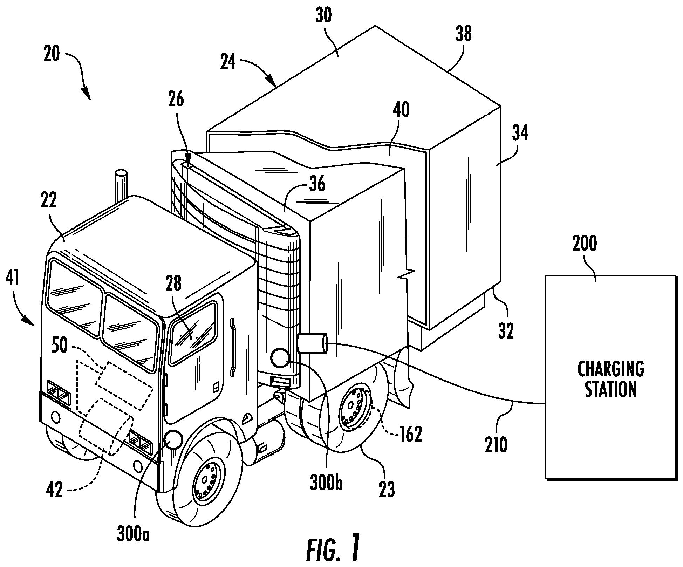

Referring to FIG. 1, a transport refrigeration system 20 of the present disclosure is illustrated. In the illustrated embodiment, the transport refrigeration systems 20 includes a tractor or vehicle 22, a container 24, and an engineless transportation refrigeration unit (TRU) 26. The container 24 may be pulled by a vehicle 22. It is understood that embodiments described herein may be applied to shipping containers that are shipped by rail, sea, air, or any other suitable container, thus the vehicle may be a truck, train, boat, airplane, helicopter, etc. The vehicle 22 may be fitted or include a generator 162 to harvest electrical power from kinetic energy of the vehicle 22. The generator 162 can be at least one of an axle generator and a hub generator mounted configured to recover rotational energy when the transport refrigeration system 20 is in motion and convert that rotational energy to electrical energy, such as, for example, when the axle of the vehicle 22 is rotating due to acceleration, cruising, or braking. The axle generator may be mounted on a wheel axle (not shown) of the vehicle 22 and the hub generator may be mounted on a wheel 23 of the vehicle 22. It is understood that the generator 162 may be mounted on any wheel or axle of the vehicle 22 and the mounting location of the generator 162 illustrated in FIG. 1 is one example of a mounting location.

The vehicle 22 may include an operator's compartment or cab 28 and a propulsion motor 42, which is part of a vehicle electrical powertrain 41 of the vehicle 22. The vehicle 22 may be driven by a driver located within the cab, driven by a driver remotely, driven autonomously, driven semi-autonomously, or any combination thereof. The propulsion motor 42 may be an electric motor or a hybrid motor (e.g., a combustion engine and an electric motor). The propulsion motor 42 may also be part of the power train or drive system 22 of the trailer system (i.e., container 24), thus the propulsion motor configured to propel the wheels of the vehicle 22 and/or the wheels of the container 24. The propulsion motor 42 may be mechanically connected to the wheels of the vehicle 22 and/or the wheels of the container 24. A vehicle energy storage device 50 is electrically connected to the propulsion motor 42 as part of a vehicle electrical powertrain 41. The propulsion motor 42 may reverse direction and be utilized for regenerative braking to slow the vehicle 22 while also charging the vehicle energy storage device 50. It is understood that the vehicle electrical powertrain 41 is illustrated in FIG. 1 as only comprising a propulsion motor 42 and vehicle storage device 50 for simplification, the vehicle electrical powertrain 41 may have additional components not illustrated in FIG. 1. The vehicle energy storage device 50 is configured to provide electricity to power the propulsion motor 42.

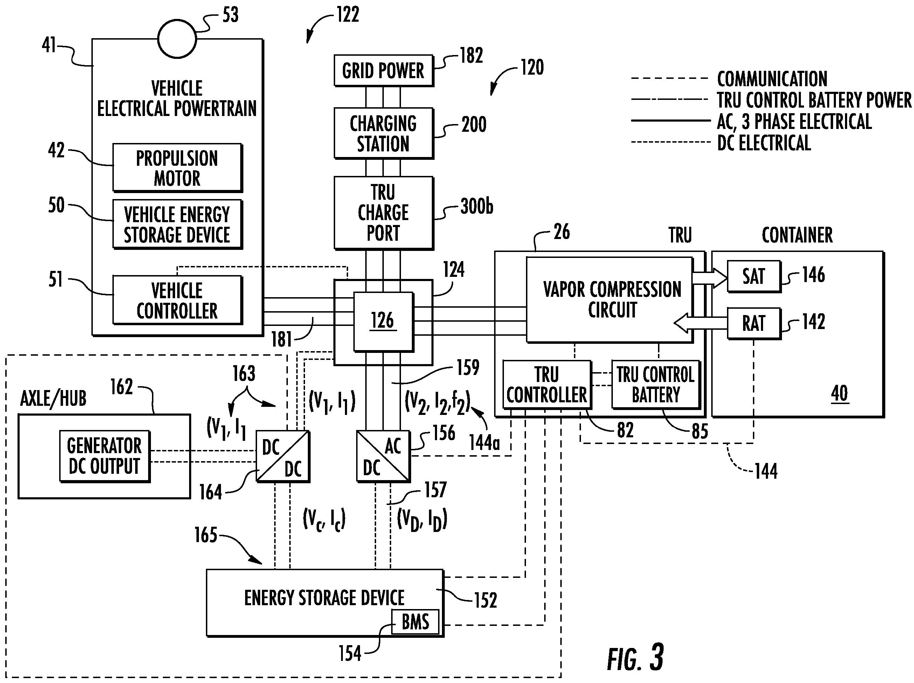

The transport refrigeration system 20 includes a vehicle charge port 300a electrically connected to the vehicle energy storage device 50 and a TRU charge port 300b electrically connected to an energy storage device 152 (see FIG. 3) of the TRU 26, discussed further below. The vehicle charge port 300a is electrically connected to the vehicle energy storage device 50. The vehicle charge port 300a allows vehicle energy storage device 50 to be recharged at a charging station 200. In order to recharge the vehicle energy storage device 50, a charging cable 210 may be plugged into the vehicle charge port 300a at the charging station 200. The TRU charge port 300b is electrically connected to an energy storage device 152 (see FIG. 3) of the TRU 26. The TRU charge port 300b allows energy storage device 152 to be recharged at a charging station 200. In order to recharge the energy storage device 152, a charging cable 210 may be plugged into the TRU charge port 300b at the charging station 200.

The container 24 may be coupled to the vehicle 22 and is thus pulled or propelled to desired destinations. The container 24 may include a top wall 30, a bottom wall 32 opposed to and spaced from the top wall 30, two side walls 34 spaced from and opposed to one-another, and opposing front and rear walls 36, 38 with the front wall 36 being closest to the vehicle 22. The container 24 may further include doors (not shown) at the rear wall 38, or any other wall. The walls 30, 32, 34, 36, 38 together define the boundaries of a refrigerated cargo space 40. Typically, transport refrigeration systems 20 are used to transport and distribute cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport. In the illustrated embodiment, the TRU 26 is associated with a container 24 to provide desired environmental parameters, such as, for example temperature, pressure, humidity, carbon dioxide, ethylene, ozone, light exposure, vibration exposure, and other conditions to the refrigerated cargo space 40. In further embodiments, the TRU 26 is a refrigeration system capable of providing a desired temperature and humidity range.

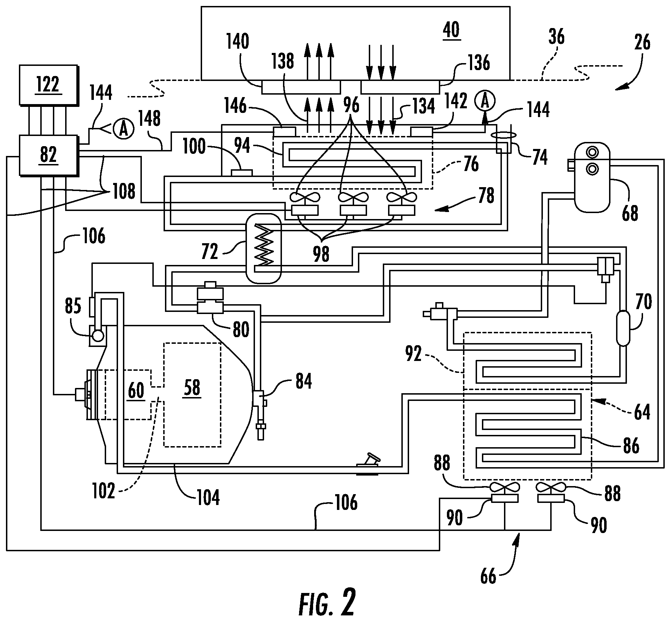

Referring to FIGs. 1 and 2, the container 24 is generally constructed to store a perishable goods (not shown) in the refrigerated cargo space 40. The TRU 26 is in operative association with the refrigerated cargo space 40. The engineless TRU 26 is generally integrated into the container 24 and may be mounted to the front wall 36. The cargo is maintained at a desired temperature by cooling of the refrigerated cargo space 40 via the TRU 26 that circulates refrigerated airflow into and through the refrigerated cargo space 40 of the container 24. It is further contemplated and understood that the TRU 26 may be applied to any transport compartments (e.g., shipping or transport containers) and not necessarily those used in tractor trailer systems. Furthermore, the container 24 may be a part of the of the vehicle 22 or constructed to be removed from a framework and wheels (not shown) of the vehicle 22 for alternative shipping means (e.g., marine, railroad, flight, and others).

The components of the engineless TRU 26 may include a compressor 58, an electric compressor motor 60, an electric energy storage device 152, a condenser 64 that may be air cooled, a condenser fan assembly 66, a receiver 68, a filter dryer 70, a heat exchanger 72, an expansion valve 74, an evaporator 76, an evaporator fan assembly 78, a suction modulation valve 80, and a controller 82 that may include a computer-based processor (e.g., microprocessor) and the like as will be described further herein. Operation of the engineless TRU 26 may best be understood by starting at the compressor 58, where the suction gas (e.g., natural refrigerant, hydro-fluorocarbon (HFC) R-404a, HFC R-134a... etc) enters the compressor 58 at a suction port 84 and is compressed to a higher temperature and pressure. The refrigerant gas is emitted from the compressor 58 at an outlet port 85 and may then flow into tube(s) 86 of the condenser 64.

Air flowing across a plurality of condenser coil fins (not shown) and the tubes 86, cools the gas to its saturation temperature. The airflow across the condenser 64 may be facilitated by one or more fans 88 of the condenser fan assembly 66. The condenser fans 88 may be driven by respective condenser fan motors 90 of the fan assembly 66 that may be electric. By removing latent heat, the refrigerant gas within the tubes 86 condenses to a high pressure and high temperature liquid and flows to the receiver 68 that provides storage for excess liquid refrigerant during low temperature operation. From the receiver 68, the liquid refrigerant may pass through a sub-cooler heat exchanger 92 of the condenser 64, through the filter-dryer 70 that keeps the refrigerant clean and dry, then to the heat exchanger 72 that increases the refrigerant sub-cooling, and finally to the expansion valve 74.

As the liquid refrigerant passes through the orifices of the expansion valve 74, some of the liquid vaporizes into a gas (i.e., flash gas). Return air from the refrigerated space (i.e., cargo refrigerated cargo space 40) flows over the heat transfer surface of the evaporator 76. As the refrigerant flows through a plurality of tubes 94 of the evaporator 76, the remaining liquid refrigerant absorbs heat from the return air, and in so doing, is vaporized and thereby cools the return air.

The evaporator fan assembly 78 includes one or more evaporator fans 96 that may be driven by respective fan motors 98 that may be electric. The airflow across the evaporator 76 is facilitated by the evaporator fans 96. From the evaporator 76, the refrigerant, in vapor form, may then flow through the suction modulation valve 80, and back to the compressor 58. The expansion valve 74 may be thermostatic or electrically adjustable. In an embodiment, as depicted, the expansion valve 74 is thermostatic. A thermostatic expansion valve bulb sensor 100 may be located proximate to an outlet of the evaporator tube 94. The bulb sensor 100 is intended to control the thermostatic expansion valve 74, thereby controlling refrigerant superheat at an outlet of the evaporator tube 94. The thermostatic expansion valve 74 may be an electronic expansion valve is in communication with the TRU controller 82. The TRU controller 82 may position the valve in response to temperature and pressure measurements at the exit of the evaporator 76. It is further contemplated and understood that the above generally describes a single stage vapor compression system that may be used for HFCs such as R-404a and R-134a and natural refrigerants such as propane and ammonia. Other refrigerant systems may also be applied that use carbon dioxide (CO₂) refrigerant, and that may be a two-stage vapor compression system.

A bypass valve (not shown) may facilitate the flash gas of the refrigerant to bypass the evaporator 76. This will allow the evaporator coil to be filled with liquid and completely 'wetted' to improve heat transfer efficiency. With CO₂ refrigerant, this bypass flash gas may be re-introduced into a mid-stage of a two-stage compressor 58.

The compressor 58 and the compressor motor 60 may be linked via an interconnecting drive shaft 102. The compressor 58, the compressor motor 60 and the drive shaft 102 may all be sealed within a common housing 104. The compressor 58 may be a single compressor. The single compressor may be a two-stage compressor, a scroll-type compressor or other compressors adapted to compress HFCs or natural refrigerants. The natural refrigerant may be CO₂, propane, ammonia, or any other natural refrigerant that may include a global-warming potential (GWP) of about one (1).

Referring now to FIG. 2, with continued reference to FIG. 1, airflow through the TRU 26 and the refrigerated cargo space 40 is illustrated. Airflow is circulated into and through and out of the refrigerated cargo space 40 of the container 24 by means of the TRU 26. A return airflow 134 flows into the TRU 26 from the refrigerated cargo space 40 through a return air intake 136, and across the evaporator 76 via the fan 96, thus conditioning the return airflow 134 to a selected or predetermined temperature. The conditioned return airflow 134, now referred to as supply airflow 138, is supplied into the refrigerated cargo space 40 of the container 24 through the refrigeration unit outlet 140, which in some embodiments is located near the top wall 30 of the container 24. The supply airflow 138 cools the perishable goods in the refrigerated cargo space 40 of the container 24. It is to be appreciated that the TRU 26 can further be operated in reverse to warm the container 24 when, for example, the outside temperature is very low.

A return air temperature sensor 142 (i.e., thermistor, thermocouples, RTD, and the like) is placed in the air stream, on the evaporator 76, at the return air intake 136 , and the like, to monitor the temperature return airflow 134 from the refrigerated cargo space 40. A sensor signal indicative of the return airflow temperature denoted RAT is operably connected via line 144 to the TRU controller 82 to facilitate control and operation of the TRU 26. Likewise, a supply air temperature sensor 146 is placed in the supply airflow 138, on the evaporator 76, at the refrigeration unit outlet 140 to monitor the temperature of the supply airflow 138 directed into the refrigerated cargo space 40. Likewise, a sensor signal indicative of the supply airflow temperature denoted SAT 146 is operably connected via line 148 to the TRU controller 82 to facilitate control and operation of the TRU 26.

Referring now to FIGs. 2 and 3, with continued reference to FIG. 1 as well, the TRU 26 may include or be operably interfaced with a power supply interface shown generally as 120. The power supply interface 120 may include, interfaces to various power sources denoted generally as 122 and more specifically as follows herein for the TRU 26, the vehicle electrical powertrain 41, and the components thereof. In an embodiment, the power sources 122 may include, but not be limited to an energy storage device 152, generator 162, the charging station 200 (i.e., grid power 182), and the vehicle energy storage device 50. Each of the power sources 122 may be configured to selectively power the vehicle electrical powertrain 41 and/or at least one component of the TRU 26 including compressor motor 60, the condenser fan motors 90, the evaporator fan motors 98, the controller 82, and other components 99 of the TRU 26 that may include various solenoids and/or sensors). The TRU controller 82 through a series of data and command signals over various pathways 108 may, for example, control the application of power to the electric motors 60, 90, 98 as dictated by the cooling needs of the TRU 26.

The engineless TRU 26 may include an AC or DC architecture with selected components employing alternating current (AC), and others employing direct current (DC). For example, in an embodiment, the motors 60, 90, 98 may be configured as AC motors, while in other embodiments, the motors 60, 90, 98 may be configured as DC motors. The operation of the of the power sources 122 as they supply power to the TRU 26 may be managed and monitored by power management system 124. The power management system 124 is configured to determine a status of various power sources 122, control their operation, and direct the power to and from the various power sources 122 and the like based on various requirements of the TRU 26 and the vehicle electrical powertrain 41. In an embodiment, the TRU controller 82 receives various signals indicative of the operational state of the TRU 26 and determines the power requirements for the TRU system 26 accordingly and directs the power supply interface 120 and specifically the power management system 124 to direct power accordingly to address the requirements of the TRU 26. In one embodiment, the TRU controller 82 monitors the RAT and optionally the SAT as measured by the return air temperature sensors 142 and supply air temperature sensor 146 respectively. The TRU controller 82 estimates the power requirements for the TRU 26 based on the RAT (among others) and provides commands accordingly to the various components of the power supply interface 120 and specifically the power management system 124, energy storage device 152, and generator power converter 164 to manage the generation, conversion, and routing of power in the power supply interface 120, TRU system 26, and vehicle electrical powertrain 41.

The TRU 26 is controlled to a temperature setpoint instruction provided by a user of the TRU 26. The TRU controller 82 may determine an estimate power demand in response to the measured RAT and the setpoint value. For example, if the (RAT-Setpoint) is above a first threshold (i.e. > 10deg F), full power of the TRU 26 is needed (i.e. at Voltage, max. amps is known). If the (RAT-Setpoint) is between first threshold and second threshold, current is limited (at voltage) to achieve a middle power (i.e., 50% power). If the (RAT-Setpoint) is below second threshold, current is limited (at voltage) to achieve a minimum power (i.e. 20% power).

With respect to switching power, the TRU controller 82 knows if the TRU 26 is on and what power is needed for operation of the TRU 26. The TRU controller 82 may also be programmed to know whether or not grid power 182 from the charging station 200 is available or not. If the grid power 182 from the charging station 200 is available, the TRU 26 is On, and the state of charge of the energy storage device 152 indicates energy storage device 152 is fully charged, grid power 182 from the charging station 200 will satisfy TRU 26 power demand. If grid power 182 from the charging station 200 is available, the TRU 26 is On, and the energy storage device 152 is not fully charged, the power demand of the TRU 26 is satisfied as a first priority and then DC/AC inverter 156 will be activated to provide necessary charging amps to energy storage device 152 as a second priority. If grid power 182 from the charging station 200 is available, the TRU 26 is Off, and the energy storage device 152 is not fully charged, then the DC/AC inverter 156 will be activated to provide necessary charging amps to energy storage device 152. If grid power 182 from the charging station 200 is not available, all of the power demand for the TRU 26 is satisfied by the energy storage device 152.

The TRU controller 82 is configured to control the components in the TRU 26 as well as the components of the power supply interface 120 in accordance with operating needs of the transport refrigeration system 20 and the electrical vehicle powertrain 41. The TRU controller 82 is communicatively coupled to the DC/AC converter 156, the battery management system 154, and the DC/DC converter 164, such that operation of the converters 164, 156 and the energy storage device 152 meet the power demand of the TRU 26 by discharging one of the energy storage device 152.

The energy storage device 152 receives power from a generator 162 directly and/or via a generator power converter 164 or the power management system 124. In an embodiment, the power management system 124 may be a stand-alone unit, integral with the generator power converter 164, and/or integral with the TRU 26. In an embodiment, the generator 162 may be DC generator, providing a first DC power 163 including a DC voltage and DC current denoted as V₁, and DC current I₁. The generator power converter 164 in one or more embodiments generates a second DC power 165 including a DC voltage Vc, a second DC current I_{C}. The second DC power 165 may be transmitted into the energy storage device 152 to charge the energy storage device 152, discussed further below. In it is understood in another embodiment that the generator 162 may produce AC power, thereby providing an AC voltage, AC current and frequency denoted as V₁', I₁', f₁'. This AC power is converted to DC by an AC/DC converter (e.g., the AC/DC converter replacing the DC/DC converter 164 of FIG. 3 or the AC/DC convertor 156) for transmission to into the energy storage device 152.

Furthermore, the charging station 200 may provide single phase (e.g., level 2 charging capability) or three phase AC power to the power management system 124. In an embodiment, the single phase AC power may be a high voltage DC power, such as, for example, 500VDC. It is understood that the charging station 200 may have any phase charging and embodiments disclosed herein are not limited to single phase or three phase AC power. The energy storage device 152 transmits DC power 157 to and receives power from the power management system 124. In one embodiment, the power management system 124 provides single phase or three phase AC power 159 to a DC/AC converter 156 to formulate a DC voltage and current to charge and store energy on the energy storage device 152. Conversely, in other embodiments the energy storage device 152 supplies DC voltage and current 157 to the DC/AC converter 156 operating as a DC/AC converter to supply AC power 159 for powering the TRU 26. The TRU may also include a dedicated TRU control battery 85 to power the TRU controller 82. For example, the TRU control battery 85 may include a 12V or 24V lead-acid (DC) battery to provide power to the TRU Controller 82. Power from the TRU control battery 85 is also used to support sensors and valve operations as needed.

A battery management system 154 monitors the performance of the energy storage device 152. For example, monitoring the state of charge of the energy storage device 152, a state of health of the energy storage device 152, and a temperature of the energy storage device 152. Examples of the energy storage device 152 may include a battery system (e.g., a battery or bank of batteries), fuel cells, flow battery, and others devices capable of storing and outputting electric energy that may be DC. The energy storage device 152 may include a battery system, which may employ multiple batteries organized into battery banks through which cooling air may flow for battery temperature control, as described in U.S. patent application Ser. No. 62/616,077, filed January 11, 2018, the contents of which are incorporated herein in their entirety.

The BMS 154 is configured to detect a state of charge of the energy storage device 152 and transmit the state of charge to the TRU controller 82. Based upon the return air temperature detected by the return air temperature sensor 142, the TRU controller 82 is configured to determine an operating power 144a required by the TRU 26. The operating power may include an operating voltage V₂, an operating current I₂ and an operating frequency f₂. The TRU controller 82 is configured to adjust the operating power of the TRU 26 in response to the return air temperature detected by the return air temperature sensor 142. The TRU controller 82 is also configured to obtain a state of charge of the energy storage device 152, which may be accomplished by contacting the BMS 154. The energy storage device 152 may be used to power the at least one component of the TRU 26 including but not limited to, the compressor motor 60, condenser fan motors 90, evaporator fan motors 98, defrost heaters (if present in some TRU configurations), and/or any other component in the vapor compression circuit of the TRU 26 needing AC power to operate.

The generator power converter 164 may be in electronic communication with the TRU controller 82, such that the TRU controller 82 may control and/or adjust charge rates of the energy storage device 152. The AC/DC converter 156 may be in electronic communication with the TRU controller 82, such that the TRU controller 82 may control and/or adjust discharge of the energy storage device 152 to satisfy the operating power of the TRU 26. The AC/DC converter 156 handles the discharging and the charging of energy storage device 152 when the charging station 200 is connected and the TRU 26 is off.

In one embodiment, the energy storage device 152 is located outside of the TRU 26, as shown in FIG. 3. In another embodiment, the energy storage device 152 is located within the TRU 26. The TRU 26 may comprise the energy storage device 152.

The energy storage device 152 may include a battery system. If the energy storage device 152 includes a battery system, the battery system may have a voltage potential within a range of about two-hundred volts (200V) to about six-hundred volts (600V). Generally, the higher the voltage, the greater is the sustainability of electric power which is preferred. However, the higher the voltage, the greater is the size and weight of, for example, batteries in an energy storage device 152, which is not preferred when transporting cargo. Additionally, if the energy storage device 152 is a battery, then in order to increase either voltage and/or current, the batteries need to be connected in series or parallel depending upon electrical needs. Higher voltages in a battery energy storage device 152 will require more batteries in series than lower voltages, which in turn results in bigger and heavier battery energy storage device 152). A lower voltage and higher current system may be used, however such a system may require larger cabling or bus bars. In an embodiment, the energy storage device 152 is located with the TRU 26, however other configurations are possible. In another embodiment, the energy storage device may be located with the container 24 such as, for example, underneath the refrigerated cargo space 40. Likewise, the DC/AC converter 156 may be located with the container 24 such as, for example, underneath the refrigerated cargo space 40, however, in some embodiments it may be desirable to have the DC/AC converter 156 in close proximity to the power management system 124 and/or the TRU 26 and TRU controller 82. It will be appreciated that in one or more embodiments, while particular locations are described with respect to connection and placement of selected components including the energy storage device 152 and/or DC/AC converter 156, such descriptions are merely illustrative and are not intended to be limiting. Varied location, arrangement and configuration of components is possible and within the scope of the disclosure.

The battery management system 154 and DC/AC converter 156 are operably connected to and interface with the TRU controller 82. The TRU controller 82 receives information regarding the status of energy storage device 152, including the energy storage device 152 to provide control inputs to the DC/AC converter 156 to monitor the energy storage device, 152, control charge and discharge rates for the energy storage device 152 and the like.

Continuing with FIG. 3, as described earlier, the power supply interface 120 may include, interfaces to various power sources 122 managed and monitored by power management system 124. The power management system 124 manages and determines electrical power flows in the power supply interface 120 based upon the operational needs of the TRU 26, the vehicle electrical powertrain 41, and the capabilities of the components in the power supply interface 120, (e.g., generator 162, converter 164, energy storage device 152, and the like). The power management system 124 is configured to determine a status of various power sources 122, control their operation, and direct the power to and from the various power sources 122 and the like based on various requirements of the TRU 26 and the vehicle electrical powertrain 41.

In an embodiment there are six primary power flows managed by the power management system 124. First, the power supplied to the power management system 124 when the TRU charge port 300a is operably connected to charging station 200. Second, the power supplied to the power management system 124 from the energy storage device 152. Third, the power directed from the power management system 124 to the energy storage device 152. Fourth, the power directed to the TRU 26 from the power management system 124 for providing power to operate the TRU 26. Fifth, the power supplied to the vehicle electrical powertrain 41 from the energy storage device 152. Sixth, the power supplied from the vehicle electrical powertrain 41 to the energy storage device 152

The six power flows will be transferred through different paths based on the requirements placed on the power management system 124 and particular configuration of the power supply interface 120. The power management system 124 operates as a central power bus to connect various power sources 122 together to supply the power needs of the TRU 26 and the vehicle electrical powertrain 41. The power management system 124 controls switching, directing, or redirecting power to/from the six power flows as needed to satisfy the power requirements of the TRU 26. Switching, directing, and redirecting may readily be accomplished employing a bus control switching device 126 of the power management system 124. The bus control switching device 126 may include, but not be limited to, electromechanical and solid state semiconductor switching devices including relays, contactors, solid state contactors as well as semiconductor switching devices such as transistors, FETs, MOSFETS, IGBT's, thyristors, SCR's, and the like. In addition, to facilitate and implement the functionality of the power management system 124, the voltages and frequencies of the power whether supplied by the charging station 200 or the DC/AC converter 156 of the bus control switching device 126 power from / to the energy storage device 152 need to be synchronized to provide a common power source to be supplied to the TRU 26, supplied to the vehicle electrical powertrain 41, charge the energy storage device 152 and/or charge the vehicle energy storage device 50.

The grid power 182 from the charging station 200 and/or power directed to/from the energy storage device 152 is supplied to the bus control switching device 126 in an overlapping or break-before-make condition as determined by the bus control switching device 126. The DC/AC converter 156, when operating as a DC to AC converter synchronizes the voltage and frequency of the power generated (e.g., 157) with the bus control switching device 126 in order to transfer power from the energy storage device 152 to the power management system 124 (and thereby the TRU 26) as needed. Likewise, grid power 182 from the charging station 200 provided to the power management system 124 is directed by the bus control switching device 126 once connected and before grid power 182 transfer is made. The DC/AC converter 156 will monitor the bus voltage/frequency of bus control switching device 126 to determine if the above parameters equal before connectivity, thus allowing minimum disruption of the power bus system. The power bus control device 126 communicates to the TRU controller 82 to determine status of flows connected. In an embodiment, the power management system 124, and or the TRU controller 82 provides visual indications of which source is selected and operating on the bus control switching device 126.

The power management system 124 is in electronic communication with the TRU controller 82 and the vehicle electrical powertrain 41 (e.g., the vehicle controller). The power management system 124 is configured to send electricity back and forth between the vehicle energy storage device 50 of the vehicle electrical powertrain 41 and the energy storage device 152 of the TRU 26. Advantageously, the ability to apportion electricity between the vehicle electrical powertrain 41 and the energy storage device 152 allows power management system 124 to send electricity to where it is needed most. For example, the vehicle energy storage device 50 may have more than enough electricity to make it to its destination, thus some electricity may be transferred from the vehicle energy storage device 50 to the energy storage device 152 of the TRU 26.

The vehicle electrical powertrain 41 may include a vehicle controller 51, the vehicle energy storage device 50, and the propulsion motor 42. The vehicle controller 51 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The vehicle controller 51 monitors the performance of the vehicle energy storage device 50. For example, monitoring the state of charge of the vehicle energy storage device 50, a state of health of the vehicle energy storage device 50, and a temperature of the vehicle energy storage device 50. Examples of the vehicle energy storage device 50 may include a battery system (e.g., a battery or bank of batteries), fuel cells, flow battery, and others devices capable of storing and outputting electric energy that may be DC.

The vehicle controller 51 also monitors future electricity requirements of the propulsion motor 42, such as, for example, electricity required to reach a final destination. For example, the vehicle controller 51 may also monitor a current location of the vehicle 22 and an amount of electricity required to allow the propulsion motor 42 to propel the vehicle 22 to reach a final destination. The vehicle controller 51 may transmit the performance of the vehicle energy storage device 50 and the future electricity requirements of the propulsion motor 42 to the power management system 124. The performance of the vehicle energy storage device 50 and the future electricity requirements of the propulsion motor 42 may be transmitted to the power management system 124 periodically.

The TRU controller 82 also determines the future electricity requirements of the TRU 26, thus determining how much electricity is required from the energy storage device 152 to power the TRU 26 to reach a final destination while maintaining setpoint temperature requirements for the perishable goods within the refrigerated cargo space 40. The future electricity requirements of the TRU 26 and a state of charge of the energy storage device 152 are transmitted to the power management system 124. The power management system 124 determines how to apportion electricity between the vehicle energy storage device 42 and the energy storage device 152 in response to the future electricity requirements of the TRU 26, a state of charge of the energy storage device 152, the future electricity requirements of the propulsion motor 42, and the state of charge of the vehicle energy storage device 50.

The power management system 124 may also instruct the TRU 26 to run at an increased rate (i.e., pulling electricity from the energy storage device 152) for a selected period of time so that cooling may be stored in the refrigerated cargo space 40, thus freeing up space in the energy storage device 152 to receive electricity from the generator 162 or regenerative braking of the propulsion motor 42, if the vehicle 22 is moving downhill. The vehicle electrical powertrain 41 may include a pitch sensor 53 configured to detect an angle of vehicle 22 to determine whether the vehicle is going downhill. It is understood that the vehicle pitch sensor 53 may be located within other components of the transport refrigeration system 20, including the TRU 26.

The power management system 124 may be removably electrically connected to the vehicle electrical powertrain 41 and specifically to the vehicle energy storage device 50. This electrical connection may be a removable electrical connection, such that if the TRU 26 and the vehicle 22 physically separate, the electrical connection may be easily separated and reconnected (e.g., a jumper electrical plug).

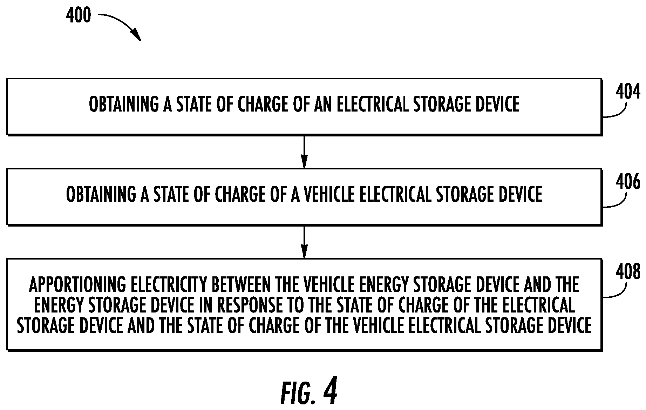

Referring now to FIG. 4, while referencing components of FIGs. 1-3. FIG. 4 shows a flow chart of method 400 of operating a TRU 26. At block 404, a state of charge of an energy storage device 152 is obtained. The energy storage device 152 is configured to store electrical power to power the TRU 26. At block 406, a state of charge of a vehicle energy storage device 50 is obtained. As mentioned above, the vehicle energy storage device 50 is electrically connected to a propulsion motor 42 of a vehicle 22. As also mentioned above, the vehicle energy storage device 50 is configured to store electrical power to power the propulsion motor 42. At block 408, electricity is apportioned between the vehicle energy storage device 50 and the energy storage device 152 in response to the state of charge of the energy storage device 152 and the state of charge of the vehicle energy storage device 50.

The method 400 further comprises: obtaining future electricity requirements of the TRU 26; obtaining future electricity requirements of the propulsion motor 42; and apportioning electricity between the vehicle energy storage device 50 and the energy storage device 152 in response to the state of charge of the energy storage device 152 and the state of charge of the vehicle energy storage device 50, the future electricity requirements of the TRU 26, and the future electricity requirements of the propulsion motor 42.

While the above description has described the flow process of FIG. 4 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention as defined by the appended claims. In addition, many modifications may be made to adapt a particular situation or material to the teachings of the present disclosure without departing from the scope of the appended claims. Therefore, it is intended that the present invention not be limited to the particular embodiment disclosed as the best mode contemplated for carrying out this present invention, but that the present invention will include all embodiments falling within the scope of the claims.

## Claims

1. A transportation refrigeration system (20) comprising a vehicle (22) having a vehicle energy storage device (50) that stores electrical power for a propulsion motor (42) that propels the vehicle (22), the transportation refrigeration system (20) comprising:
a transportation refrigeration unit (26);
an energy storage device (152) electrically connected to the transportation refrigeration unit (26), the energy storage device (152) configured to store electrical power to power the transportation refrigeration unit (26); and
a power management system (124) electrically connected to the vehicle energy storage device (50) and the energy storage device (152), wherein the power management system (124) is configured to apportion electricity between the vehicle energy storage device (50) and the energy storage device (152); **characterized by**
a transportation refrigeration unit controller (82) configured to determine a state of charge of the energy storage device (152) and future electricity requirements of the transportation refrigeration unit (26); and
a vehicle controller (51) configured to determine a state of charge of the vehicle energy storage device (50) and future electricity requirements of the propulsion motor (42),
wherein the power management system (124) is configured to apportion electricity between the vehicle energy storage device (50) and the energy storage device (152) in response to the state of charge of the energy storage device (152), the state of charge of the vehicle energy storage device (50), the future electricity requirements of the transportation refrigeration unit (26), and the future electricity requirements of the propulsion motor (42).

2. The transportation refrigeration system (20) of claim 1, further comprising:
a vehicle pitch sensor (53) configured to detect a pitch angle of the vehicle (22),
wherein the power management system (124) is configured to adjust electrical power provided to the transportation refrigeration unit (26) in response to the pitch angle of the vehicle (22).

3. The transportation refrigeration system (20) of claim 2, wherein the power management system (124) increases electrical power provided to the transportation refrigeration unit (26) when the pitch angle of the vehicle (22) indicates that the vehicle is going downhill.

4. The transportation refrigeration system (20) of claim 1, wherein at least one of the energy storage device (152) and the vehicle energy storage device (50) includes a battery system.

5. The transportation refrigeration system (20) of claim 1, wherein the energy storage device (152) is located outside of the transportation refrigeration unit (26).

6. The transportation refrigeration system (20) of claim 1, wherein the energy storage device (152) is located within the transportation refrigeration unit (26).

7. The transportation refrigeration unit (26) of claim 1, wherein the power management system (124) is removably electrically connected to the vehicle energy storage device (50).

8. A method (400) of operating a transportation refrigeration unit (26), the method comprising:
obtaining a state of charge of an energy storage device (152), the energy storage device (152) being configured to store electrical power to power the transportation refrigeration unit (26);
obtaining a state of charge of a vehicle energy storage device (50), the vehicle energy storage device (50) being electrically connected to a propulsion motor (42) of a vehicle (22), wherein the vehicle energy storage device (50) being configured to store electrical power to power the propulsion motor (42);
apportioning electricity between the vehicle energy storage device (50) and the energy storage device (152) in response to the state of charge of the energy storage device (152) and the state of charge of the vehicle energy storage device (50)
obtaining future electricity requirements of the transportation refrigeration unit (26);
obtaining future electricity requirements of the propulsion motor (42); and
apportioning electricity between the vehicle energy storage device (50) and the energy storage device (152) in response to the state of charge of the energy storage device (152) and the state of charge of the vehicle energy storage device (50), the future electricity requirements of the transportation refrigeration unit (26), and the future electricity requirements of the propulsion motor (42).

## Patentansprüche

1. Transportkühlsystem (20), umfassend ein Fahrzeug (22), das eine Fahrzeugenergiespeichervorrichtung (50) aufweist, die elektrische Leistung für einen Antriebsmotor (42) speichert, der das Fahrzeug (22) antreibt, wobei das Transportkühlsystem (20) umfasst:
eine Transportkühleinheit (26);
eine Energiespeichervorrichtung (152), die elektrisch mit der Transportkühleinheit (26) verbunden ist, wobei die Energiespeichervorrichtung (152) dazu konfiguriert ist, elektrische Leistung zu speichern, um die Transportkühleinheit (26) mit Strom zu versorgen; und
ein Leistungsmanagementsystem (124), das elektrisch mit der Fahrzeugenergiespeichervorrichtung (50) und der Energiespeichervorrichtung (152) verbunden ist, wobei das Leistungsmanagementsystem (124) dazu konfiguriert ist, Elektrizität zwischen der Fahrzeugenergiespeichervorrichtung (50) und der Energiespeichervorrichtung (152) aufzuteilen;
**gekennzeichnet durch**
ein Transportkühleinheit-Steuergerät (82), das dazu konfiguriert ist, einen Ladezustand der Energiespeichervorrichtung (152) und zukünftige Elektrizitätsanforderungen der Transportkühleinheit (26) zu bestimmen; und
ein Fahrzeugsteuergerät (51), das dazu konfiguriert ist, einen Ladezustand der Fahrzeugenergiespeichervorrichtung (50) und zukünftige Elektrizitätsanforderungen des Antriebsmotors (42) zu bestimmen,
wobei das Leistungsmanagementsystem (124) dazu konfiguriert ist, Elektrizität zwischen der Fahrzeugenergiespeichervorrichtung (50) und der Energiespeichervorrichtung (152) als Reaktion auf den Ladezustand der Energiespeichervorrichtung (152), den Ladezustand der Fahrzeugenergiespeichervorrichtung (50), die zukünftigen Elektrizitätsanforderungen der Transportkühleinheit (26) und die zukünftigen Elektrizitätsanforderungen des Antriebsmotors (42) aufzuteilen.

2. Transportkühlsystem (20) nach Anspruch 1, ferner umfassend:
einen Fahrzeugneigungssensor (53), der dazu konfiguriert ist,
einen Neigungswinkel des Fahrzeugs (22) zu detektieren,
wobei das Leistungsmanagementsystem (124) dazu konfiguriert ist, der Transportkühleinheit (26) bereitgestellte elektrische Leistung als Reaktion auf den Neigungswinkel des Fahrzeugs (22) einzustellen.

3. Transportkühlsystem (20) nach Anspruch 2, wobei das Leistungsmanagementsystem (124) der Transportkühleinheit (26) bereitgestellte elektrische Leistung erhöht, wenn der Neigungswinkel des Fahrzeugs (22) angibt, dass das Fahrzeug bergab fährt.

4. Transportkühlsystem (20) nach Anspruch 1, wobei mindestens eine von der Energiespeichervorrichtung (152) und der Fahrzeugenergiespeichervorrichtung (50) ein Batteriesystem einschließt.

5. Transportkühlsystem (20) nach Anspruch 1, wobei die Energiespeichervorrichtung (152) außerhalb der Transportkühleinheit (26) angeordnet ist.

6. Transportkühlsystem (20) nach Anspruch 1, wobei die Energiespeichervorrichtung (152) innerhalb der Transportkühleinheit (26) angeordnet ist.

7. Transportkühleinheit (26) nach Anspruch 1, wobei das Leistungsmanagementsystem (124) entfernbar elektrisch mit der Fahrzeugenergiespeichervorrichtung (50) verbunden ist.

8. Verfahren (400) zum Betreiben einer Transportkühleinheit (26), wobei das Verfahren umfasst:
Erhalten eines Ladezustands einer Energiespeichervorrichtung (152), wobei die Energiespeichervorrichtung (152) dazu konfiguriert ist, elektrische Leistung zu speichern, um die Transportkühleinheit (26) mit Strom zu versorgen;
Erhalten eines Ladezustands einer Fahrzeugenergiespeichervorrichtung (50), wobei die Fahrzeugenergiespeichervorrichtung (50) elektrisch mit einem Antriebsmotor (42) eines Fahrzeugs (22) verbunden ist, wobei die Fahrzeugenergiespeichervorrichtung (50) dazu konfiguriert ist, elektrische Leistung zu speichern, um den Antriebsmotor (42) mit Strom zu versorgen;
Aufteilen von Elektrizität zwischen der Fahrzeugenergiespeichervorrichtung (50) und der Energiespeichervorrichtung (152) als Reaktion auf den Ladezustand der Energiespeichervorrichtung (152) und den Ladezustand der Fahrzeugenergiespeichervorrichtung (50) Erhalten von zukünftigen Elektrizitätsanforderungen der Transportkühleinheit (26);
Erhalten von zukünftigen Elektrizitätsanforderungen des Antriebsmotors (42); und
Aufteilen von Elektrizität zwischen der Fahrzeugenergiespeichervorrichtung (50) und der Energiespeichervorrichtung (152) als Reaktion auf den Ladezustand der Energiespeichervorrichtung (152) und den Ladezustand der Fahrzeugenergiespeichervorrichtung (50), die zukünftigen Elektrizitätsanforderungen der Transportkühleinheit (26) und die zukünftigen Elektrizitätsanforderungen des Antriebsmotors (42).

## Revendications

1. Système de réfrigération pour le transport (20) comprenant un véhicule (22) ayant un dispositif de stockage d'énergie de véhicule (50) qui stocke de l'énergie électrique pour un moteur à propulsion (42) qui propulse le véhicule (22), le système de réfrigération pour le transport (20) comprenant :
une unité de réfrigération pour le transport (26) ;
un dispositif de stockage d'énergie (152) connecté électriquement à l'unité de réfrigération pour le transport (26), le dispositif de stockage d'énergie (152) étant configuré pour stocker de l'énergie électrique afin d'alimenter l'unité de réfrigération pour le transport (26) en énergie ; et
un système de gestion d'énergie (124) connecté électriquement au dispositif de stockage d'énergie de véhicule (50) et au dispositif de stockage d'énergie (152), dans lequel le système de gestion d'énergie (124) est configuré pour répartir de l'électricité entre le dispositif de stockage d'énergie de véhicule (50) et le dispositif de stockage d'énergie (152) ;
**caractérisé par**
un dispositif de commande d'unité de réfrigération pour le transport (82) configuré pour déterminer un état de charge du dispositif de stockage d'énergie (152) et des besoins futurs en électricité de l'unité de réfrigération pour le transport (26) ; et
un dispositif de commande de véhicule (51) configuré pour déterminer un état de charge du dispositif de stockage d'énergie de véhicule (50) et des besoins futurs en électricité du moteur à propulsion (42),
dans lequel le système de gestion d'énergie (124) est configuré pour répartir de l'électricité entre le dispositif de stockage d'énergie de véhicule (50) et le dispositif de stockage d'énergie (152) en fonction de l'état de charge du dispositif de stockage d'énergie (152), de l'état de charge du dispositif de stockage d'énergie de véhicule (50), des besoins futurs en électricité de l'unité de réfrigération pour le transport (26) et des besoins futurs en électricité du moteur à propulsion (42).

2. Système de réfrigération pour le transport (20) selon la revendication 1, comprenant en outre :
un capteur de tangage de véhicule (53) configuré pour détecter un angle de tangage du véhicule (22),
dans lequel le système de gestion d'énergie (124) est configuré pour ajuster l'énergie électrique fournie à l'unité de réfrigération pour le transport (26) en fonction de l'angle de tangage du véhicule (22).

3. Système de réfrigération pour le transport (20) selon la revendication 2, dans lequel le système de gestion d'énergie (124) augmente l'énergie électrique fournie à l'unité de réfrigération pour le transport (26) lorsque l'angle de tangage du véhicule (22) indique que le véhicule descend une pente.

4. Système de réfrigération pour le transport (20) selon la revendication 1, dans lequel au moins l'un parmi le dispositif de stockage d'énergie (152) et le dispositif de stockage d'énergie de véhicule (50) comporte un système de batterie.

5. Système de réfrigération pour le transport (20) selon la revendication 1, dans lequel le dispositif de stockage d'énergie (152) est situé à l'extérieur de l'unité de réfrigération pour le transport (26).

6. Système de réfrigération pour le transport (20) selon la revendication 1, dans lequel le dispositif de stockage d'énergie (152) est situé à l'intérieur de l'unité de réfrigération pour le transport (26).

7. Unité de réfrigération pour le transport (26) selon la revendication 1, dans laquelle le système de gestion d'énergie (124) est connecté électriquement de manière amovible au dispositif de stockage d'énergie de véhicule (50).

8. Procédé (400) permettant de faire fonctionner une unité de réfrigération pour le transport (26), le procédé comprenant :
l'obtention d'un état de charge d'un dispositif de stockage d'énergie (152), le dispositif de stockage d'énergie (152) étant configuré pour stocker de l'énergie électrique afin d'alimenter l'unité de réfrigération pour le transport (26) en énergie ;
l'obtention d'un état de charge d'un dispositif de stockage d'énergie de véhicule (50), le dispositif de stockage d'énergie de véhicule (50) étant connecté électriquement à un moteur à propulsion (42) d'un véhicule (22), dans lequel le dispositif de stockage d'énergie de véhicule (50) étant configuré pour stocker de l'énergie électrique afin d'alimenter le moteur à propulsion (42) en énergie ;
la répartition d'électricité entre le dispositif de stockage d'énergie de véhicule (50) et le dispositif de stockage d'énergie (152) en fonction de l'état de charge du dispositif de stockage d'énergie (152) et de l'état de charge du dispositif de stockage d'énergie de véhicule (50)
l'obtention de besoins futurs en électricité de l'unité de réfrigération pour le transport (26) ;
l'obtention de besoins futurs en électricité du moteur à propulsion (42) ; et
la répartition d'électricité entre le dispositif de stockage d'énergie de véhicule (50) et le dispositif de stockage d'énergie (152) en fonction de l'état de charge du dispositif de stockage d'énergie (152), de l'état de charge du dispositif de stockage d'énergie de véhicule (50), des besoins futurs en électricité de l'unité de réfrigération pour le transport (26) et des besoins futurs en électricité du moteur à propulsion (42).
